Europäisches Patentamt

European Patent Office

Office européen des brevets

(11) Veröffentlichungsnummer: **0 141 218**

**B1**

(19)

(12) # EUROPÄISCHE PATENTSCHRIFT

(45) Veröffentlichungstag der Patentschrift:
31.05.89

(51) Int. Cl.⁴: **H 04 B 1/10**

(21) Anmeldenummer: **84111154.5**

(22) Anmeldetag: **19.09.84**

(54) Detektor zur Anzeige von Empfangsstörungen beim UKW-Rundfunkempfang.

(30) Priorität: **26.09.83 DE 3334735**

(43) Veröffentlichungstag der Anmeldung:
**15.05.85 Patentblatt 85/20**

(45) Bekanntmachung des Hinweises auf die Patenterteilung:
**31.05.89 Patentblatt 89/22**

(84) Benannte Vertragsstaaten:
**DE FR GB IT NL SE**

(56) Entgegenhaltungen:
**EP-A-0 010 552**
**DE-B-1 282 746**

**PATENTS ABSTRACTS OF JAPAN, Band 7, Nr. 272
(E-214)(1417), 3. Dezember 1983; & JP - A - 58 151735**
**PATENTS ABSTRACTS OF JAPAN, Band 3, Nr. 64 (E-
114), 31. Mai 1979, Seite 113 E114; & JP - A - 54 42913**
**PATENTS ABSTRACTS OF JAPAN, Band 4, Nr. 36 (E-
3)(518), 26 März 1980, Seite 23 E 3; & JP - A - 55 6972 &
JP - A - 55 6973**

(73) Patentinhaber: **Hans Kolbe & Co., Bodenburger
Strasse 32, D-3202 Bad Salzdetfurth (DE)**
Patentinhaber: **N.V. Philips' Gloeilampenfabrieken,
Groenewoudseweg 1, NL- 5621 BA Eindhoven (NL)**

(72) Erfinder: **Lindenmeier, Heinz, Prof. Dr. Ing.,
Fürstenrieder Strasse 7, D-8033 Planegg (DE)**
Erfinder: **Manner, Ernst, Dipl.- Ing.,
Rembrandtstrasse 6, D-8012 Ottobrunn (DE)**
Erfinder: **Flachenecker, Gerhard, Prof. Dr. Ing.,
Bozener Strasse 2, D-8012 Ottobrunn (DE)**

(74) Vertreter: **De Jongh, Cornelis Dominicus,
INTERNATIONAAL OCTROOIBUREAU B.V. Prof.
Holstlaan 6, NL- 5656 AA Eindhoven (NL)**

## Beschreibung

Die Erfindung betrifft einen Detektor zur Anzeige von Empfangsstörungen beim UKW-Rundfunkempfang der im Oberbegriff des Anspruchs 1 bezeichneten Art.

Ein solcher Detektor ist aus DE-B-1 282 746 bekannt. Solche Detektoren werden Vorzugsweise verwendet zur Verbesserung des Rundfunkempfangs in Kraftfahrzeugen. Der Detektor hat die Aufgabe, eine Empfangsstorung zu erkennen und anzuzeigen. Daraufhin wird eine Umschaltmaßnahme eingeleitet, die im allgemeinen elektronisch durchgeführt wird. Zum Beispiel wird in der Offenlegungsschrift DE-A1-3 107 970 ein FM-Empfanger (FM = Frequenzmodulation) beschrieben, in dem mit Hilfe eines Detektors und einer Umschalteinrichtung automatisch das Mehrwegerauschen vermieden wird. In der Offenlegungsschrift DE-A- 1 3 122 057 wird eine Tunersteuerung mit einem Detektor zum Wahrnehmen des Signalpegels in einem Rundfunkempfänger vorgestellt. Weiterhin ist in der US-Patentschrift 3 825 697 von einer Umschalteinrichtung die Rede, die nach Erkennung einer Störung infolge des Mehrwegeempfangs von Stereobetrieb auf Monobetrieb umschaltet. In allen beschriebenen Fällen ist ein Detektor zur Erkennung der Störung erforderlich.

Ein Detektor zur Erkennung von Störungen ist aus der US-Patentschrift 4 216 353 bekannt. Dieser Detektor ist speziell konzipiert für die Erkennung von störender Mehrwegausbreitung der elektromagnetischen Wellen mit großen unterschiedlichen Laufzeiten. Aus diesem Effekt resultieren am Ausgang des Frequenzdemodulators ein erhöhtes Rauschen und eine Verzerrung der niederfrequenten Nachtricht. Im Fall der Stereo-Aussendung führt dieser Effekt auch zu einem erhöhten Übersprechen zwischen den beiden Stereo-Kanälen. Der in dieser Patentschrift beschriebene Detektor beruht auf der Auswertung des Amplituden/Zeitverlaufs des empfangsseitig vorliegenden frequenzmodulierten Signals. Dieser Detektor hat insbesondere im Hinblick auf einen Einsatz in einem Autoempfänger folgende Nachteile:

Es ist bekannt, daß die Überlagerung von Teilwellen am Empfangsort bei Laufzeitunterschieden zwischen einer µs und 100 µs zu nennenswerten Verzerrungen der niederfrequenten Nachricht am Ausgang des FM-Demodulators führt. Diese Verzerrung geht einher mit einer vom niederfrequenten Nachrichteninhalt abhängigen Amplitudenmodulation des resultierenden Hochfrequenzträgers am Empfangsort. Der in der US-Patentschrift 4 216 353 angegebene Detektor erkennt diese Amplitudenmodulation und zeigt sie als Störung an. Meistens jedoch ist das Wellenfeld aus Teilwellen zusammengesetzt, deren Laufzeitunterschiede unter einer µs liegen.

Diese Überlagerung der Teilwellen führt empfängerseitig nicht zu Störungen, verursacht aber eine starke Ortsabhängigkeit der resultierenden Feldamplitude. Der Eingangspegel des Autoempfängers erfährt deshalb durch die Eigenbewegung des Fahrzeugs in diesem Wellenfeld eine zeitliche Amplitudenänderung, die sich als Amplitudenmodulation ausdrückt. Der bekannte Detektor besitzt deshalb den Nachteil, zwischen einer Amplitudenmodulationsart, die nicht zu Störungen führt, und einer anderen Amplitudenmodulationsart, die auf Grund der Mehrwegausbreitung mit großen Laufzeitunterschieden entsteht und deshalb Störungen hervorruft, unterscheiden zu müssen. Besonders schwierig ist die Situation dadurch, daß beide Modulationsarten statistisch und zeitweise gleichzeitig auftreten. Daraus resultiert eine unsichere Erkennung der wirklichen Störung und eine verhältnismäßig große Detektionszeit. Diese Detektionszeit führt dazu, daß die Eingriffe in das Empfangssystem durch Umschalten erst so spät vorgenommen werden können, daß der Rundfunkhörer die Störung bereits wahrgenommen hat.

Auch die aus DE-B-1 282 746 bekannte Anordnung erkennt Störamplitudenmodulation, daneben besitzt diese Anordnung auch einen Detektor zur Anzeige vor Frequenzstörhub. Die Ausgangssignale des Detektors für Störamplitudenmodulation und des Detektors für Frequenzstörhub werden auf eine Solche Weise kombiniert, daß für niedrige UHF Signalspannungswerte die Störamplitudenmodulation bestimmend ist für die Anzeige einen Empfangstörung, während für relativ hohe Signalspannungswerte der Frequenzstörhub die Anzeige einer Empfangsstörung bestimmt.

Weiter ist aus EP-A-0 010 552 eine Anordnung bekannt, bei der Störungamplitudenmodulation und Frequenzhub detektiert werden. Die Ausgangssignale der beiden Detektoren werden dabei zur Formung des Quotients $\delta A/A_o \delta\omega$, der ein Maß for den Grad der Mehrwegsempfangstörungen ist, benutz.

Aufgabe der Erfindung ist es, das Vorliegen von Empfangsstörungen, die beim UKW-Stereo- oder -Monoempfang auftreten und insbesondere vom Mehrwegeempfang mit starken Laufzeitunterschieden der überlagerten Wellen herrühren, schnell und treffsicher zu erkennen und anzuzeigen.

Diese Aufgabe wird durch die Merkmale des Kennzeichens des Anspruchs 1 gelöst.

Weitere vorteilhafte Merkmale und vorteilhafte Ausführungsformen der Erfindung sind in den abhängigen Ansprüchen gekennzeichnet.

Die Erfindung, Ihre Merkmale und Vorteile sowie weitere Einzelheiten werden anhand von Ausführungsbeispeilen erläutert, die in der Zeichnung dargestellt sind. In dieser Beschreibung werden folgende Abkorzungen verwendet: FM = Frequenzmodulation, AM = Amplitudenmodulation, HF = Hochfrequenz, ZF = Zwischenfreguenz. In der Zeichnung zeigen:

Fig. 1 ein Blockschaltbild der grundsätzlichen Ausführung des Detektors nach der Erfindung,

Fig. 2 ein Blockschaltbild einer Ausführungsform der Auswerteschaltung des Detektors,

Fig. 3 und 4 ein Blockschaltbild bzw. Teilblockschaltbild zweier abgewandelter Ausführungsformen des Detektors nach der Erfindung mit besonderen Ausführungen von FM- und AM-Detektor und der Auswerteschaltung nach Fig. 2,

Fig. 5 ein Blockschaltbild einer Ausführungsform des Detektors als Kombination von Fig. 3 und 4,

Fig. 6 und 7 je ein Schaltbild zweier Ausführungsformen der die Steilheit der Pulsflanken anhebenden Schaltung,

Fig. 8 ein Teilblockschaltbild des Detektors nach der Erfindung mit einer weiteren Ausführungsform der Auswerteschaltung,

Fig. 9 ein Blockschaltbild des Detektors mit einer Schaltung (14) zur analogen Verknüpfung der Ausgangssignale des Detektors zur Anzeige von Frequenzstörhub (1) und des AM-Detektors (10) zur Anzeige von Störamplitudenmodulation,

Fig. 10 ein Diagramm des zeitlichen Verlaufs des Nutzfrequenzhubes bei sinusförmigem NF-Signal,

Fig. 11 ein Diagramm des zeitlichen Verlaufs des resultierenden Frequenzhubes bei Überlagerung von Wellen mit großen Laufzeitunterschieden bei sinusförmigem Nutzsignal,

Fig. 12 ein Diagramm des zeitlichen Verlaufs der resultierenden Empfangsträgeramplitude bei Mehrwegeausbreitung mit großen Laufzeitunterschieden oder beim Empfang im fahrenden Auto bei Mehrwegeausbreitung mit kleinen Laufzeitunterschiedenoder bei vermischten Effekten.

Ein widtiger Grundgedanke der vorliegenden Erfindung beruht in der Verknüpfung der Ausgangssignale eines Detektors zur Anzeige von Frequenzstörhub und eines AM-Detektors zur Anzeige von Störamplitudenmodulation. Alle bisher bekannten Detektoren zur Anzeige von Empfangsstörungen sind darauf beschränkt, die störungsbedingte Amplitudenmodulation des frequenzmodulierten Hochfrequenzträgers auszuwerten. Dadurch entstehen die oben beschriebenen Fehlindikationen von Empfangsstörungen. Dies führt bei Systemen, die auf der Umschaltung zwischen verschiedenen Antennen beruhen, zu zusätzlichen Empfangsstörungen und zu lagen Umschaltzeiten.

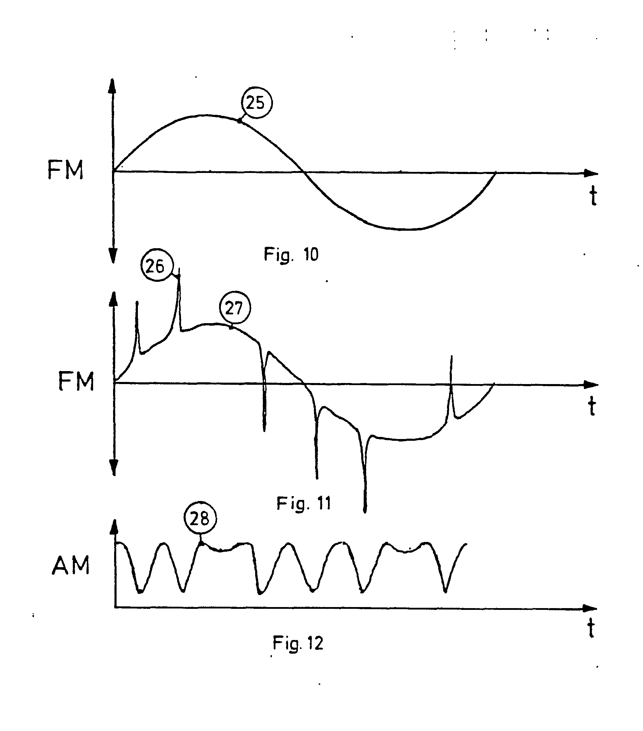

Die Mangelhaftigkeit der Erkennung von Empfangsstörungen aus dem zeitlichen Verlauf der Trägeramplitude nach den am Anmeldetag bekannten Verfahren, geht beispielhaft aus folgender Betrachtung der in Fig. 10 bis 12 dargestellten Signal-Zeitverläufe hervor. Ist das zu übertragende Signal 25 sinusförmig, so ist bei ungestörter Übertragung der zeitliche Verlauf 25 des Nutzfrequenzhubs ebenfalls sinusförmig, wie in Fig. 10 dargestellt. Bewegt sich die Antenne im Empfangswellenfeld, das sich aus einer Reihe von überlagerten, aus unterschiedlichen Richtungen infolge von Mehrwegeausbreitung einfallenden Wellen mit kleinen Laufzeitunterschieden zusammensetzt, so kann sich am Empfängereingang ein zeitlicher Verlauf der Trägeramplitude einstellen, wie er z. B. durch die Kurve 28 in Fig. 12 dargestellt ist. In diesem Fall führt das aus der Superposition der nach Rayleigh überlagerten Wellen resultierende HF-Signal dann nicht zu einer Verzerrung im demodulierten Signal, wenn während der Amplitudeneinbrüche der Rauschpegel der Empfangsanlage nicht unterschritten wird. Die in Fig. 12 dargestellte Amplitudenmodulation wird durch die Amplitudenbegrenzung vor der Frequenzdemodulation unwirksam. Überschreitet die Laufzeitdifferenz der sich im Wellenfeld überlagernden Wellen einen bestimmten Wert, so stellt sich abhängig vom Frequenznutzhub und von den Amplitudenverhältnissen der überlagerten Wellen ein Störfrequenzhub ein, der zu Frequenzstörhubspitzen 26 führt, die durch die Kurve 27 in Fig. 11 dargestellt sind. Beim Vergleich von Fig. 11 und 12 ist erkennbar, daß zu Zeiten, zu denen Frequenzstörhubspitzen im verzerrten Signal auftreten, ein Amplitudeneinbruch in der darunterstehenden Kurve auftritt. Diese Korrelation macht sich die vorliegende Erfindung zu Nutze, um Empfangsstörungen insbesondere schnell und sicher festzustellen. Aus dem Zeitverlauf der Amplitudenmodulation kann nicht sicher auf das Auftreten von Empfangsstörungen geschlossen werden. Dies trifft insbesondere im fahrenden Fahrzeug zu, wo die resultierende Amplitudenmodulation einerseits von der Bewegung innerhalb eines Wellenfeldes mit Teilwellen kleiner Laufzeitunterschiede abhängt, als auch von der systembedingten Störung als Folge der Überlagerung mehrerer Wellen mit großen Laufzeitunterschieden entsteht. Mit Hilfe der erfindungsgemäßen gleichzeitigen Auswertung von Frequenzstörhubspitzen und der Amplitudenmodulation ist die Anzeige des Empfangsstörungsdetektors schnell und sicher genug, um Umschaltmaßnahmen hinreichend frühzeitig bei Auftreten einer Störung einzuleiten.

Bei Empfangsstörungen durch Mehrwegeempfang mit nicht zu kleinen Laufzeitunterschieden wird also sowohl die Amplitude des Hochfrequenzträgers als auch die Momentanfreuenz der resultierenden empfangenen Hochfrequenz schwingung im Moment der Störung verfälscht. Eine Störung kann also an der Gleichzeitigkeit des Auftretens von Amplituden- und Frequenzstörung sicher erkannt werden. Eine längere Beobachtungszeit der Störung ist für ihre treffsichere Erkennung nicht nötig. Durch gleichzeitige Überwachung der störungsbedingten Amplituden und Frequenzfehler der resultierenden Hochfrequenzschwingung am Empfangsort kann deshalb unmittelbar nach Auftreten beider Fehler eine geeignete Umschaltmaßnahme zur Vermeidung dieser Empfangsfehler im Empfangssystem eingeleitet werden. Die mit dem erfindungsgemäßem Detektor zur Anzeige von Empfangsstörungen realisierbaren Erkennungszeiten für Empfangsstörungen können bis in den Bereich von µs reduziert werden. Daraus können Umschaltmaßnahmen abgeleitet werden, die bei geeigneter Ausführung eine Vermeidung von hörbaren Empfangsstörungen gewährleisten.

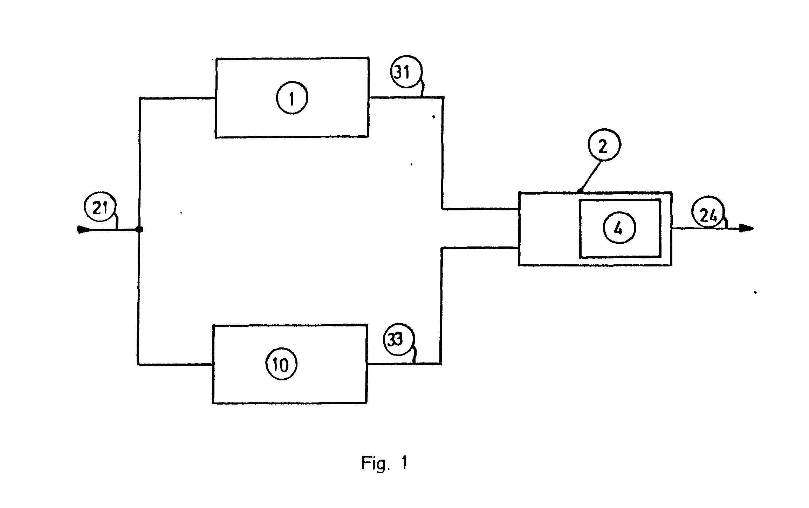

In Fig. 1 ist ein Detektor zur Anzeige von Empfangsstörungen dargestellt. Dieser besteht aus einem Detektor 1 zur Anzeige von Frequenzstörhub, einem AM-Detektor 10 zur Anzeige von Störamplitudenmodulation und einer Auswerteschaltung 2, die zwei Eingänge besitzt. Beiden Detektoren 1 und 10 wird das gegebenenfalls gestörte Signal auf dem hoch- oder zwischenfrequenten Träger 21 zugeführt. Die beiden Ausgangssignale 31 und 33 dieser Detektoren werden über jeweils einen Eingang der Auswerteschaltung 2 zugeführt Die Auswerteschaltung 2 ist derart ausgestaltet, daß das Ausgangssignal 24 sowohl von der Störamplitudenmodulation des hochfrequenzten Trägers 21 als auch von seinem Frequenzstörhub abhängt.

In einer besonderen Ausführung der Erfindung ist die Auswerteschaltung 2 derart gestaltet, daß das Ausgangssignal 24 binären Charakter besitzt und derart gestaltet ist, daß nur dann das Auftreten einer Störung angezeigt wird, wenn sowohl der Frequenzstörhub als auch die Störamplitudenmodulation des empfangenen hochfrequenten bzw. zwischenfrequenzten Signals 21 jeweils einen bestimmten Schwellenwert überschreiten. Die binäre Entscheidung für das Vorliegen einer Empfangsstörung wird von einer Logikschaltung 4 getroffen. Am Eingang der Auswerteschaltung 2 wird das -erschreiten der Störamplitudenmodulation bzw. des Frequenzstörhubs, bezogen auf geeignet eingestellte Schwellenwerte, festgestellt. Die Verknüpfung dieser beiden Informationen erfolgt in der Logikschaltung 4. Eine geeignete Einstellung der Schwellenwerte wird zweckmäßiger Weise an der Hörbarkeitsschwelle der empfangenen Störungen gemessen.

In einer besonders vorteilhaften einfachen Ausführungsform der Erfindung wird der AM-Detektor 10 zur Anzeige von Störamplitudenmodulation als Hüllkurvendemodulator ausgeführt. Hierbei ist zweckmäßig, die Frequenzbandbreite des AM Detektors nicht kleiner als die UKW-Kanalbandbreite zu wählen.

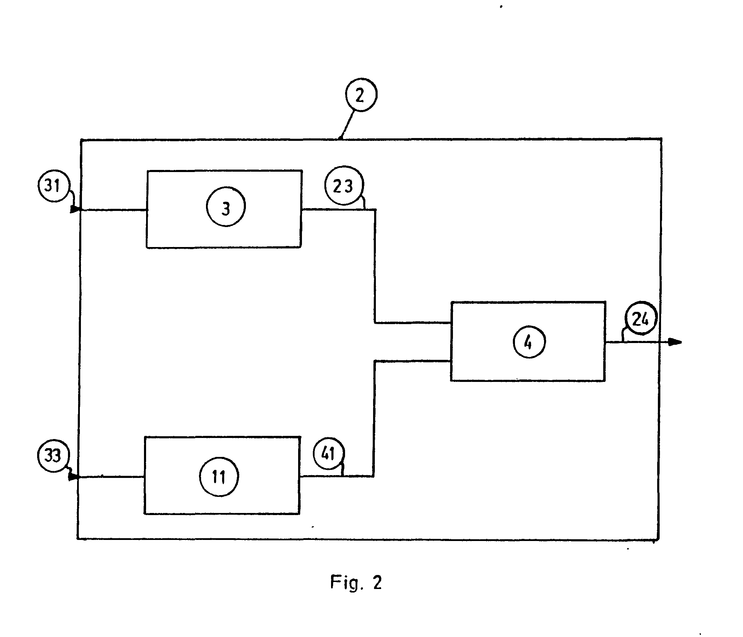

In Fig. 2 ist eine vorteilhafte Ausgestaltung der Auswerteschaltung 2 dargestellt. Diese besitzt einen unipolar oder bipolar arbeitenden Pegeldiskriminator 3, dem das Ausgangssignal 31 des Detektors 1 zur Anzeige von Frequenzstörhub zugeführt ist. Im Signalzweig zur Feststellung von Störamplitudenmodulation ist ein unipolarer Pegeldiskriminator 11 vorhanden, dem das Ausgangssignal 33 des AM-Detektors 10 zugeführt wird. Die Ausgangssignale 23 und 41 der beiden Pegeldiskriminatoren 3 und 11 werden von der Logikschaltung 4 ausgewertet derart, daß das Ausgangssignal 24 der Auswerteschaltung 2 binär das Auftreten einer Empfangsstörung anzeigt. Das Ausgangssignal 24 zeigt nur dann eine Störung an, wenn beide Schwellen der Pegeldiskriminatoren 3 und 11 überschritten werden.

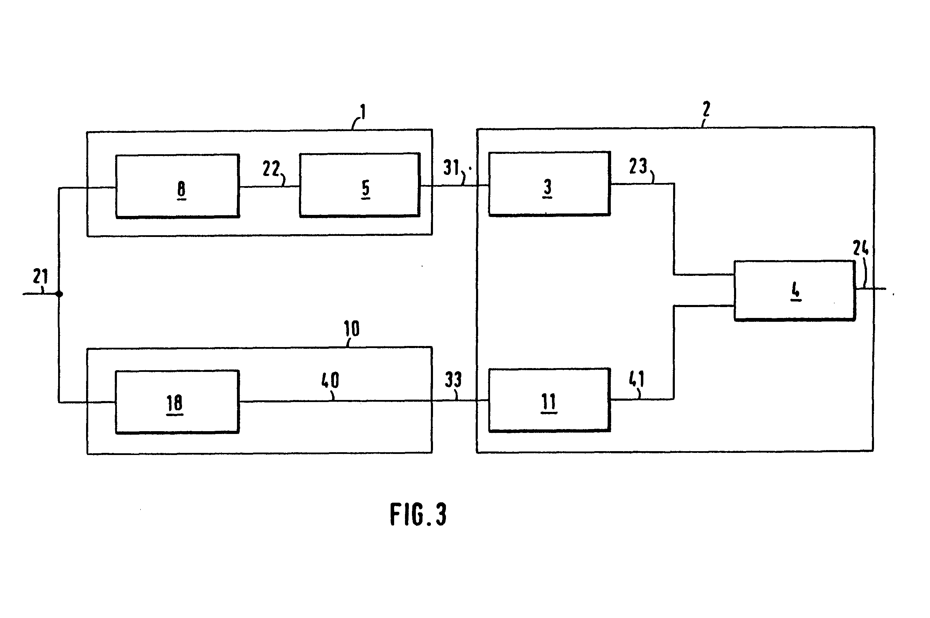

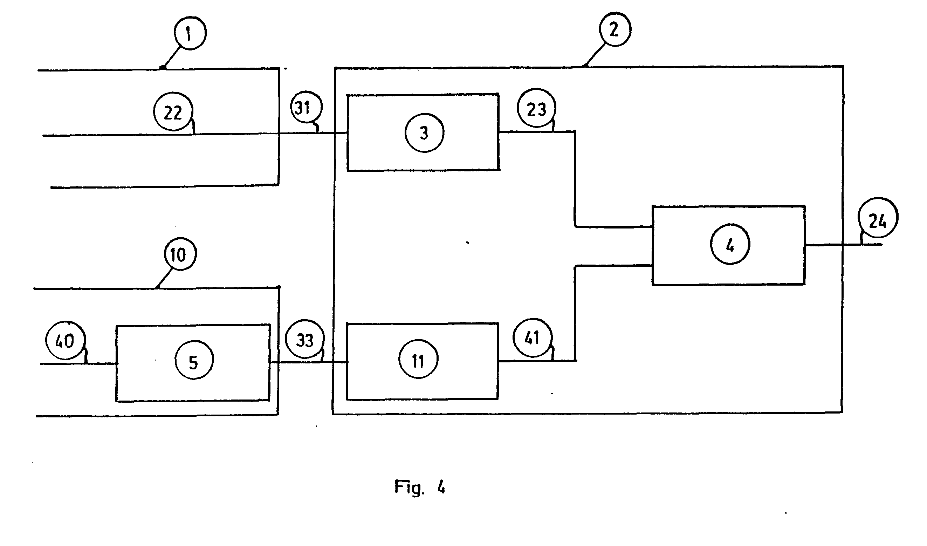

Empfangsstörungen treten in den Ausgangsspannungen 31 und 33 der beiden Detektoren 1 und 10 in Impulsform auf. Um diese Störungen besser von den Nutzinhalten der Empfangssignale unterscheiden zu können, werden diese Pulse in einer vorteilhaften Ausgestaltung der Erfindung mit Hilfe von einer die Steilheit der Pulsflanken anhebenden Schaltung aus dem übrigen Signal herausgearbeitet. Dies führt zu einer weiteren Verbesserung der Treffsicherheit bei der Feststellung von Empfangsstörungen. Im Gegensatz zu dem eingangs erwähnten Stand der Technik, demgemäß Empfangsstörungen durch Amplitudendemodulation mit nachgeschalteten Tiefpässen ermittelt werden, sind bei der vorliegenden Erfindung Filter mit Hochpaßcharakter vorgesehen, die nicht durch Verzögernde Wirkung eine lange Erkennungszeit der Störungen erzwingen. Fig. 3 zeit für den FM-Detektor 1 eine die Steilheit die Pulsflanken anhebende Schaltung 5, die dem FM-Demodulator 8 nachgeschaltet ist. Die störungsbedingten Pulsspitzen im Ausgangssignal 31 sind demnach größer als die entsprechenden Spitzen im Signal 22, dem Ausgangssignal des FM-Demodulators 8, und können vom Pegeldiskriminator 3 leichter vom übrigen Nutzsignal abgetrennt werden. Auf ähnliche Weise wie im Zweig zur Erkennung von Frequenzstörhub kann eine die Steilheit der Pulsflanken anhebende Schaltung 5 dem AM-Demodulator 18 nachgeschaltet werden. Auf ähnliche Weise sind hier die Störpulse im Ausgangssignal 33 gegenüber dem Amplitudenverlauf, der sich durch Bewegung des Fahrzeugs im stehende Wellen im Empfangsfeld ergibt, stärker hervorgehoben, als im Signal 40, dem Ausgangssignal des AM-Demodulators 18. Dies in in Fig. 4 dargestellt

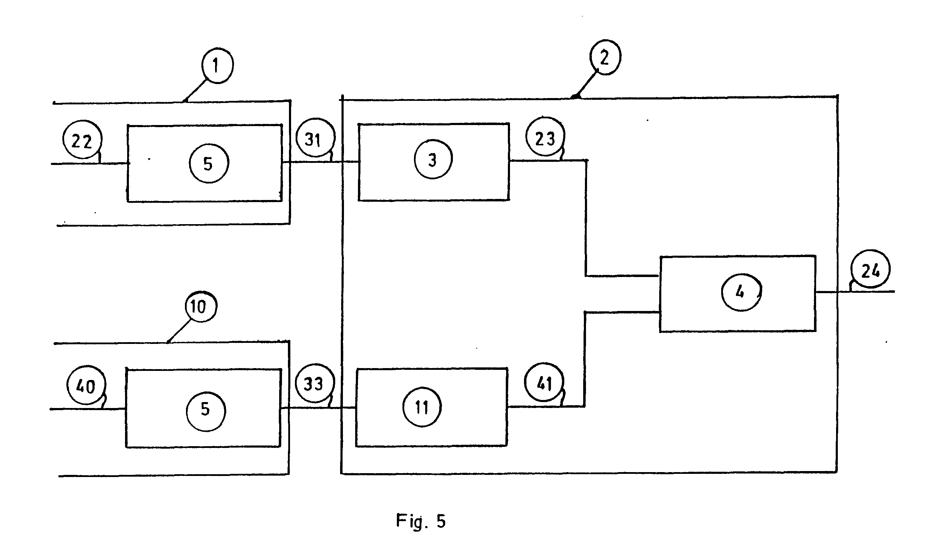

Fig. 5 zeigt eine Kombination der Maßnahmen nach Fig. 4 und Fig. 3.

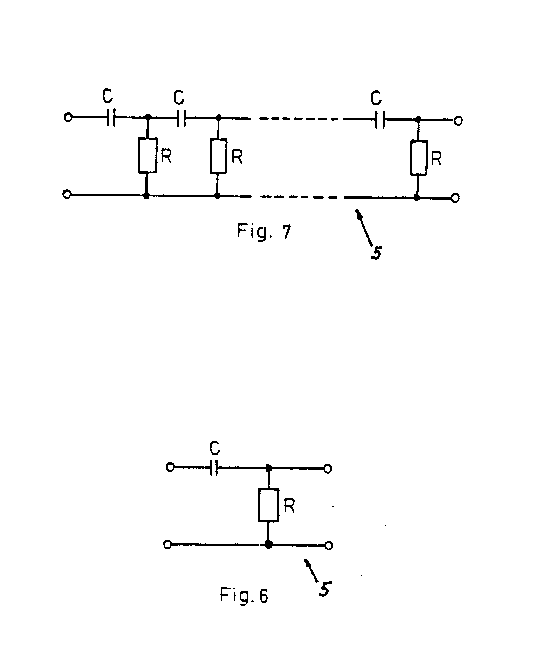

Eine die Steilheit der Pulsflanken anhebende Schaltung 5 kann in einer besonders einfachen Ausgestaltung durch ein RC-Hochpaßglied hergestellt werden. Auf an sich bekannte Weise kann die Zeitkonstante dieser RC-Schaltung durch Wahl der Serienkapazität und des Parallelwiderstandes eingestellt werden. Diese Zeitkonstante wird vorteilhafter weise so eingestellt, daß bei den üblicherweise auftretenden Empfangsstörungen eine bestmögliche Erkennung der Störpulse ermöglicht wird. Ein derartiges in Fig. 6 dargestelltes Differenzierglied kann in einer weiteren Ausgestaltung der Erfindung als RC-Kettenschaltung, wie in Fig. 7 dargestellt, realisiert werden. Die Steilheit der Pulsflanken wächst mit der Zahl der Kettenglieder an.

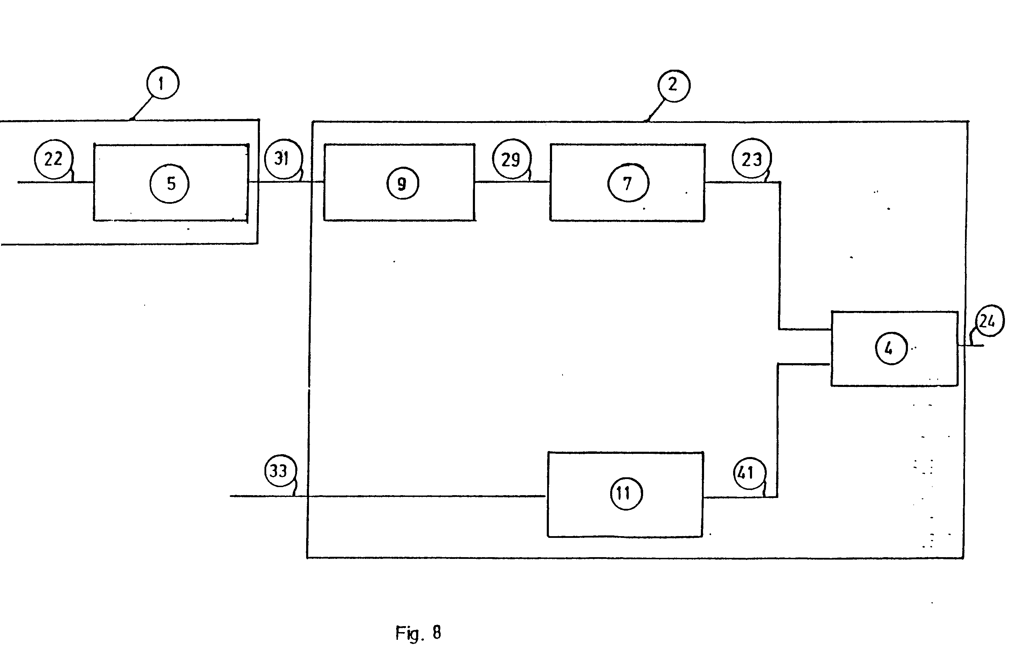

In Fig. 8 sind sowohl im Zweig zur Feststellung von Frequenzstörhubspitzen als auch im Zweig zur Feststellung von Störamplitudenmodulation jeweils ein unipolarer Pegeldiskriminator 7 und 11 eingesetzt. Um trotzdem die bipolaren Pulsfolgen im Ausgangssignal 31 des FM-Detektors 1 verarbeiten zu können, wird in einer vorteilhaften Ausgestaltung der Erfindung ein Zweiweggleichrichter 9 mit dem Ausgangssignal 29 dem unipolar arbeitenden Pegeldiskriminator 7 vorgeschaltet. Ohne diesen Zweiweggleichrichter würden lediglich Störpulse einer Polarität im Signal 31 ausgewertet. Durch zusätzliche Auswertung der Störpulse der anderen Polarität kann die Sicherheit für die Erkennung der Störung in kurzer Zeit weiter erhöht werden.

In Fig. 6 ist die Steilheit der Pulsflanken anhebende Schaltung 5 durch ein frequenzabhängiges Netzwerk mit Hochpaßcharakter realisiert. In einer weiteren Ausgestaltung der Erfindung kann eine derartige Schaltung frequenzunabhängig gestaltet werden. In diesem Fall wird eine Schaltung gewählt, die auf an sich bekannte Weise bezüglich des Zusammenhangs zwischen Ausgangs- und Eingangssignal aus einer Potenzfunktion mit geradzahligen Exponenten oder aus einer Summe solcher Potenzfunktionen mit gleichen Vorzeichen besteht, wobei der kleinste vorkommende Exponent größer ist als die Zahl 1. In einem solchen Fall kann der Doppelweggleichrichter 9 entfallen. Auf besonders vorteilhafte Weise läßt sich eine derartige die Steilheit der Pulsflanken anhebende Schaltung aus Halbleiterdioden-Kennlinien zusammensetzen. Hierbei ist eine Schaltung von besonderer Bedeutung, bei deren Zusammenhang zwischen Ausgangs- und Eingangssignal eine Hyperbel-Cosinusfunktion vorliegt.

Die Logikschaltung 4 wird in einer besonders einfachen Ausgestaltung als UND-Gatter ausgeführt.

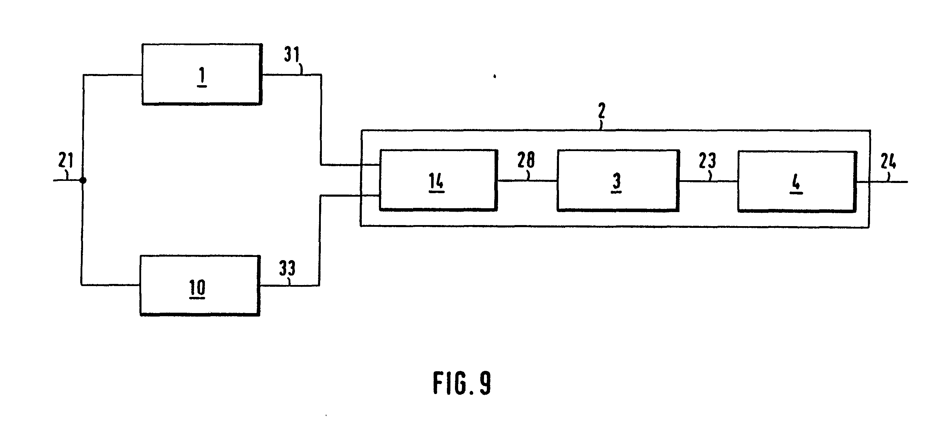

In einer einfachen Ausgestaltung der Erfindung wird in Fig. 9 nur ein unipolarer oder bipolarer Pegeldiskriminator 3 angewandt. In diesem Fall ist es notwendig, am Eingang der Auswerteschaltung 2 eine Schaltung 14 zur analogen Verknüpfung des Ausgangssignals 31 und des Ausgangssignals 33 vorzunehmen. Die Ausgangsspannung 28 dieser Schaltung 14 wächst mit den Eingangssignalen 31 und 33 an. Überschreitet die Ausgangsspannung 28 den im Pegeldiskriminator 3 vorgegebenen Schwellwert, so ergibt sich seinem Ausgangssignal 23 eine binäre Anzeige für das Auftreten der Empfangsstörung. Die nachgeschaltete Logikschaltung 4 könnte in diesem Fall zur weiteren logischen Verarbeitung des Signals 23 dienen. Auf ähnliche Weise, wie in den Ansprüchen 2 bis 14 werden in den Ansprüchen 17 bis 24 die übrigen Systemkomponenten des erfindungsgemäß vorliegenden Detektors mit einer Schaltung 14 zur analogen Verknüpfung der Ausgangssignale 31 und 33 gekennzeichnet.

In einer vorteilhaften Ausgestaltung der Erfindung wird die Pegelschwelle des Pegeldiskriminators bzw. der Pegeldiskriminatoren abhängig vom zeitlich gemittelten Frequenzhub dynamisch eingestellt. Dieser zeitlich gemittelte Frequenzhub kann auf an sich bekannte Weise z. B. aus dem Signal 22 am Ausgang des FM-Demodulators 8 abgeleitet werden. Um den Störfrequenzhub zu relativieren, ist es in einer besonderen Ausgestaltung der Erfindung vorteilhaft, mit steigendem Nutzfrequenzhub die Schwelle zur Feststellung eines Störfrequenzhubes entsprechend anzuheben. Auf diese Weise wird die Empfindlichkeit der Störfrequenzhubanzeige bei kleinem Nutzfrequenzhub angehoben. Insbesondere bei Nutzsignalen mit großer Dynamik ist es vorteilhaft, die Pegelschwelle des Pegeldiskriminators in Abhängigkeit von den auftretenden Spitzen des Nutzfrequenzhubes einzustellen. Hierbei wird die Pegelschwelle mit wachsenden Spitzen des Nutzfrequenzhubes entsprechend angehoben. Ein Detektor gemäß der vorliegenden Erfindung wird bei ungünstigem Signalrauschverhältnis im Hochfrequenzkanal auch das Rauschen als Störung anzeigen. Um diese Art der Störung von Mehrwegeempfangsstörungen besser abzugrenzen, wird die Pegelschwelle zusätzlich vom Signalrauschverhältnis abhängig eingestellt. Hierbei ist es erforderlich, mit kleiner werdendem Signalrauschverhältnis die Pegelschwelle zur Feststellung einer Empfangsstörung dynamisch anzuheben. Dabei wird auf vorteilhafte Weise verhindert, daß in Empfangsgebieten mit kleiner Empfangsfeldstärke, d.h. mit schlechtem Signalrauschverhältnis, Empfangsstörungen angezeigt werden, die lediglich auf das Fehlen von Empfangspegel zurückzuführen sind. Diese Einstellung wird dabei erfindungsgemäß derart ausgestaltet, daß bei Vorliegen von reinem Rauschen trotzdem noch eine Empfangsstörung angezeigt wird, so daß auch bei fehlendem Signal Umschaltmaßnahmen mit Hilfe dieser Detektion durchgeführt werden können. Mit kleiner werdendem Signalrauschverhältnis wird somit lediglich die Empfindlichkeit der Störungsdetektion herabgesetzt. Da das Empfängerrauschen häufig das Gesamtrauschen im System bestimmt, kann in einer besonders einfachen Ausführungsform der Erfindung die Einstellung der Pegelschwelle anhand der zeitlich gemittelten Amplitude des Hochfrequenzträgers vorgenommen werden.

Nach einer weiteren Ausführungsform der Erfindung kann die Pegelschwelle des Pegeldiskriminators 7 oder der Pegeldiskriminatoren 3 und 11 ausschließlich oder zusätzlich abhängig von der zeitlich gemittelten Trägeramplitude geeignet eingestellt sein. Hierbei werden zweckmäßig die Pegelschwelle bzw. Pegelschwellen mit abnehmender Trägeramplitude angehoben. In weiterer Ausgestaltung der Erfindung kann eine Schaltung zur Ermittlung der Spitzenwerte des Frequenznutzhubes vorhanden sein und die Schwelle des Pegeldiskriminators 7 oder der Pegeldiskriminatoren 3 und 11 ausschließlich oder zusätzlich abhängig von diesen Spitzenwerten des Frequenznutzhubes geeignet eingestellt sein. Dabei ist es zweckmäßig, wenn die Pegelschwelle bzw. die Pegelschwellen mit steigenden Spitzenwerten des Frequenznutzhubes angehoben werden.

**Patentansprüche**

1. Detektor zur Anzeige von Empfangsstörungen beim FM-UKW-Rundfunkempfang, mit einem Detektor (1) zur Anzeige von Frequenzstörhub im Signalträger und einem AM-Detektor (10) zur Anzeige von Störamplitudenmodulation im Signalträger und einer Auswerteschaltung (2) mit zwei Eingängen, wobei die Ausgangssignale (31 und 33) der Detektoren jeweils einem dieser Eingänge der Auswerteschaltung (2) zugeführt sind, dadurch gekennzeichnet, daß die Auswerteschaltung (2) einen Pegeldiskriminator (7) enthält, dem das Ausgangssignal (31) des Detektors (1) zur Anzeige von Frequenzstörhub zugefohrt ist, und daß ein weiterer Pegeldiskriminator (11) vorhanden ist, dem das Ausgangssignal (33) des AM-Detektors (10) zugeführt ist, und daß die Ausgangssignale (23 und 41) beider Pegeldiskriminatoren einer Logikschaltung (4) innerhalb der Auswerteschaltung (2) zugeführt sind, an deren Ausgang das Vorliegen der Empfangsstörung durch ein logisches Signal (24) angezeigt ist, wenn sowohl der Frequenzstörhub als auch die Störamplitudenmodulation die von den zugehörenden Pegeldiskriminatoren (7, 11) bestimmten Schwellenwerte überschreiten.

2. Detektor nach Anspruch 1, dadurch gekennzeichnet, daß die Auswerteschaltung (2) aus zwei unipolar arbeitenden Pegeldiskriminatoren (7 und 11) und einer Logikschaltung (4) besteht, daß einer der Pegeldiskriminatoren (7) nur eine Pegelschwelle besitzt welche zur Anzeige der Überschreitung eines vorgegebenen positiven bzw. negativen Frequenzstörhubes geeignet eingestellt ist, und daß die Ausgangssignale (23 und 41) der Pegeldiskriminatoren (7 und 11) der Logikschaltung (4) zugeführt werden, an deren Ausgang das Vorliegen der Empfangsstörung durch ein binäres Signal (24) angezeigt ist.

3. Detektor nach Anspruch 2, dadurch gekennzeichnet, daß dem Pegeldiskriminator (7), an dessen Eingang der Detektor (1) zur Anzeige von Frequenzstörhub geschaltet ist, eine Schaltung (9) mit dem Charakter eines Doppelweggleichrichters vorgeschaltet ist.

4. Detektor nach den Anspruch 1 oder 2, wobei mindestens einem der Eingänge der Auswerteschaltung (2) eine die Steilheit der Pulsflanken anhebende Schaltung (5) vorgeschaltet ist, dadurch gekennzeichnet, daß die die Steilheit der Pulsflanken anhebende Schaltung einen Zusammenhang zwischen Ausgangs- und Eingangsignals in Form Potenzfunktion mit geradzahligem Exponenten oder in Form einer Summe solcher Potenzfunktionen mit gleichen Vorzeichen aufweist und der Exponent größer ist als die Zahl 1.

5. Detektor nach Anspruch 4, dadurch gekennzeichnet, daß die die Steilheit der Pulsflanken anhebende Schaltung (5) einen Zusammenhang zwischen Ausgangs- und Eingangssignals im Form einer Funktion mit dem Charakter einer Hyperbel-Cosinus-Funktion aufweist.

6. Detektor nach einem der Ansprüche 1 bis 5, dadurch gekennzeichnet, daß die Logikschaltung (4) den Charakter eines UND-Gatters besitzt.

7. Detektor nach einem der Ansprüche 1 bis 6, dadurch gekennzeichnet, daß die Pegelschwelle des Pegeldiskriminators oder der Pegeldiskriminatoren abhängig vom zeitlich gemittelten Frequenzhub dynamisch eingestellt ist und daß mit steigendem zeitlich gemittelten Frequenzhub die Pegelschwelle bzw. Pegelschwellen angehoben werden.

8. Detektor nach einem der Ansprüche 1 bis 7, dadurch gekennzeichnet, daß eine Schaltung zur Ermittlung des Signal-Störabstandes im Basisband vorhanden ist und die Pegelschwelle des Pegeldiskriminators oder der Pegeldiskriminatoren entsprechend den Signal-Störabstand dynamisch angehoben wird.

9. Detektor nach einem der Ansprüche 1 bis 7, dadurch gekennzeichnet, daß die Pegelschwelle des Pegeldiskriminators oder der Pegeldiskriminatoren ausschließlich oder zusätzlich abhängig von der zeitlich gemittelten Trägeramplitude so eingestellt ist, daß diese mit abnehmender Trägeramplitude angehoben wird.

10. Detektor nach einem der Ansprüche 1 bis 6, 8 und 9, dadurch gekennzeichnet, daß eine Schaltung zur Ermittlung der Spitzenwerte des Frequenznutzhubes vorhanden ist und die Schwelle des Pegeldiskrimimators oder der Pegeldiskriminatoren ausschließlich oder zusätzlich abhängig von diesen Spitzenwerten des Frequenznutzhubes so eingestellt ist, daß diese mit steigenden Spitzenwerten des Frequenznutzhubes angehoden wird.

**Claims**

1. A detector for indicating reception disturbances during FM - UHF broadcast reception, comprising a detector (1) for indicating disturbance-related frequency deviation in a signal carrier and an AM detector (10) for indicating disturbance-related amplitude modulation in the signal carrier and an evaluating circuit (2) having two inputs, in which the output signals (31 and 33) of the detectors are applied to one of these inputs of the evaluating circuit (2), wherein the evaluating circuit (2) comprises a level discriminator (7) to which is applied the output signal (31) of the detector (t) for indicating a disturbance-related frequency deviation, and wherein a further level discriminator (11) is provided to which is applied the output signal (33) of the AM detector (10), and wherein the output signals (23 and 41) of both level discriminators are applied to a logic circuit (4) in the evaluating circuit (2), at whose output the presence of a reception disturbance is shown by a logic signal (24), when both the disturbance-related frequency deviation and the disturbance-related amplitude modulation exceed the threshold values determined by the associated level discriminators (7, 11).

2. A detector as defined in Claim 1, wherein the evaluating circuit (2) includes two unipolarly operating level discriminators (7 and 11) and a logic circuit (4), wherein one of the level discriminators (7) has only a single level threshold which is adjusted correspondingly to indicate the exceeding of a predetermined positive or negative disturbance-related frequency deviation, and wherein the output signals (23 and 41) are applied to the level discriminators (7 and 11) of the logic circuit (4) at whose output the presence of the reception disturbance is shown by a binary signal (24).

3. A detector as defined in Claim 2, wherein a circuit (9) having the characteristic feature of a dual wave rectifier is arranged prior to the level discriminator (7) to whose input the detector (1) is connected for showing a disturbance-related frequency deviation.

4. A detector as defined in Claim 1 or 2, in which at least one of the inputs of the evaluating circuit (2) is arranged prior to a circuit (5) increasing the steepness of the pulse flanks, wherein the circuit (5) increasing the steepness of the pulse flanks shows a correlation between the output signal and the input signal in the form of an exponential function with an even-numbered exponent or in a sum of such an exponential function with the same sign and the exponent exceeds 1.

5. A detector as defined in Claim 4, wherein the circuit (5) for increasing the steepness of the pulse flanks shows a correlation between the output signal and the input signal in the form of a function having the character of a hyperbolic-cosine function.

6. A detector as defined in one of the Claims 1 to 5, wherein the logic circuit (4) has the character of an AND-gate.

7. A detector as defined in one of the Claims 1 to 6, wherein the level threshold of the level discriminator or level discriminators is dynamically adjusted in dependence on the time-averaged frequency deviation and wherein the level threshold or level thresholds respectively, are increased with an increasing time-averaged frequency deviation

8. A detector as defined in one of the Claims 1 to 7, wherein a circuit for determining the signal-to-noise ratio in the baseband is provided and the level threshold of the level discriminator or level discriminators is increased in accordance with the signal-to-noise ratio.

9. A detector as defined in Claims 1 to 7, wherein the level threshold of the level discriminator or level discriminators is adjusted exclusively or additionally in dependence on the time-averaged carrier amplitude in a manner such that it is increased with a decreasing carrier amplitude.

10. A detector as defined in one of the Claims 1 to 6, 8 and 9, wherein a circuit for detecting the peak value of the useful frequency deviation is provided and the threshold of the level discriminator or level discriminators is adjusted, exclusively or additionally, in dependence on these peak values of the useful frequency deviation in a manner such that it is increased with increasing peak values of the useful frequency deviation.

**Revendications**

1. Détecteur pour indiquer des perturbations de réception dans le cas d'une réception radio FM en ondes métriques, comportant un détecteur (1) pour indiquer un écart de fréquence perturbateur dans la porteuse de signal et un détecteur AM (10) pour indiquer la modulation d'amplitude perturbatrice dans la porteuse de signal et un circuit d'évaluation (2) comportant deux entrées, les signaux de sortie (31 et 33) des détecteurs étant chacun appliqués à une de ces entrées du circuit d'évaluation (2), caractérisé en ce que le circuit d'évaluation (2) contient un discriminateur de niveau (7) auquel est appliqué le signal de sortie (31) du détecteur (1) destiné à l'indication de l'écart de fréquence perturbateur, et qu'un autre discriminateur de niveau (11) est présent auquel est appliqué le signal de sortie (33) du détecteur AM (10), et que les signaux de sortie (23 et 41) des deux discriminateurs de niveaux sont appliqués à un circuit logique (4) à l'intérieur du circuit d'évaluation (2), sur la sortie duquel la présence de la perturbation de réception est indiquée par un signal logique (24), lorsque l'écart de fréquence perturbateur et la modulation d'amplitude perturbatrice excèdent tous deux les valeurs de seuil déterminées par les discriminateurs de niveaux (7, 11) associés.

2. Détecteur suivant la revendication 1, caractérisé en ce que le circuit d'évaluation (2) est constitué de deux discriminateurs de niveaux à fonctionnement unipolaire (7 et 11) et d'un circuit logique (4), qu'un des discriminateurs de niveaux (7) ne comporte qu'un seul seuil de niveau qui est réglé adéquatement pour indiquer le dépassement par excès d'un écart de fréquence perturbateur positif ou négatif prédéfini, et que les signaux de sortie (23 et 41) des discriminateurs de niveaux (7 et 11) sont appliqués au circuit logique (4), sur la sortie duquel la présence de la perturbation de réception est indiquée par un signal binaire (24).

3. Détecteur suivant la revendication 2, caractérisé en ce qu'un circuit (9) de la nature d'un redresseur des deux alternances est connecté en amont du discriminateur de niveau (7) à l'entrée duquel est connecté le détecteur (1) destiné à l'indication de l'écart de fréquence perturbateur.

4. Détecteur suivant la revendication 1 ou 2, dans lequel au moins une des entrées du circuit d'évaluation (2) est précédée d'un circuit (5) augmentant la raideur de la pente des flancs d'impulsions, caractérisé en ce que le circuit (5) augmentant la raideur de la pente des flancs d'impulsions présente une relation entre le signal de sortie et le signal d'entrée ayant la forme d'une fonction de puissance à exposants entiers ou la forme d'une somme de telles fonctions de puissance de même signe, l'exposant étant supérieur à 1.

5. Détecteur suivant la revendication 4, caractérisé en ce que le circuit (5) augmentant la raideur de la pente des flancs d'impulsions présente une relation entre le signal de sortie et le signal d'entrée ayant la forme d'une fonction de la nature d'une fonction hyperbole-cosinus.

6. Détecteur suivant l'une quelconque des revendications 1 à 5, caractérisé en ce que le circuit logique (4) est de la nature d'un circuit-porte ET.

7. Détecteur suivant l'une quelconque des revendications 1 à 6, caractérisé en ce que le seuil de niveau du discriminateur de niveau ou des discriminateurs de niveaux est réglé de manière dynamique en fonction de l'écart de fréquence moyen dans le temps et que le seuil ou les seuils de niveaux sont augmentés à mesure que l'écart de fréquence moyen dans le temps s'accroît.

8. Détecteur suivant l'une quelconque des revendications 1 à 7, caractérisé par la présence d'un circuit pour déterminer la distance de perturbation de signal dans la bande de base, le seuil de niveau du discriminateur de.niveau ou des discriminateurs de niveaux étant augmenté de manière dynamique en fonction de la distance de perturbation de signal.

9. Détecteur suivant l'une quelconque des revendications 1 à 7, caractérisé en ce que le seuil de niveau du discriminateur de niveau ou des discriminateurs de niveaux est réglé, exclusivement ou en supplément, en fonction de l'amplitude de porteuse moyenne dans le temps, d'une manière telle que ce seuil augmente à mesure que l'amplitude de la porteuse diminue.

10. Détecteur suivant l'une quelconque des revendications 1 à 6, 8 et 9, caractérisé par la présence d'un circuit destiné à déterminer les valeurs de pointe de l'écart de fréquence utile, le seuil du discriminateur de niveau ou des discriminateurs de niveaux étant réglé exclusivement ou en supplément en fonction de ces valeurs de pointe de l'écart de fréquence utile, d'une manière telle que ce seuil augmente à mesure que les valeurs de pointe de l'écart de fréquence utile s'accroissent.

Fig. 1

Fig. 2

FIG.3

Fig. 4

EP 0 141 218 B1

Fig. 5

Fig. 7

Fig. 6

Fig. 8

FIG. 9

FM

Fig. 10

FM

Fig. 11

AM

Fig. 12